# FASCICULE DE BREVET EUROPEEN

(11) **EP 2 912 640 B1**
(45) Date de publication et mention de la délivrance du brevet: **16.08.2017**
(21) Numéro de dépôt: 13774689.7
(22) Date de dépôt: 11.10.2013
(51) Int. Cl.: G06Q 20/34, H04L 29/06

(54) **PROCÉDÉ DE GESTION D'IDENTIFIANTS DANS UNE CARTE A CIRCUIT INTEGRÉ ET CARTE A CIRCUIT INTEGRÉ CORRESPONDANTE**
VERFAHREN ZUM VERWALTEN VON KENNUNGEN IN EINER SMART KARTE UND SMART KARTE
METHOD FOR MANAGING IDENTIFIERS IN A SMART CARD AND SMART CARD

(30) Priorité: 23.10.2012 FR 1260098
(43) Date de publication de la demande: 02.09.2015
(73) Titulaire: Morpho, 92130 Issy-les-Moulineaux (FR)
(72) Inventeur: PEPIN, Cyrille, F-92130 Issy Les Moulineaux (FR); LECOCQ, François, F-92130 Issy Les Moulineaux (FR); GESLAIN, Raphaël, F-92130 Issy Les Moulineaux (FR)
(74) Mandataire: Lavialle, Bruno François Stéphane
(86) Numéro de dépôt international: PCT/EP2013/071363
(87) Numéro de publication internationale: WO 2014/063940

(56) Documents cités:
- US-A1- 2003 189 092
- US-B1- 8 108 307
- "Card Payments Roadmap in the United States: How Will EMV Impact the Future Payments Infrastructure?", , 1 septembre 2012 (2012-09-01), XP055065063, Extrait de l'Internet: URL:http://web.archive.org/web/20121021010 658/http://www.smartcardalliance.org/resou rces/pdf/Payments_Roadmap_in_the_US_091512 .pdf [extrait le 2013-06-03]
- R. Thomas: "Betriebssysteme", , 1 janvier 2010 (2010-01-01), XP055065065, Munich (DE) Extrait de l'Internet: URL:http://web.archive.org/web/20100628105 849/http://lsw.ee.hm.edu/~thomas/Vorlesung /VBS/vbs_all.pdf [extrait le 2013-06-03]

## Description

La présente invention concerne la gestion des identifiants d'une application au sein d'une carte comportant un circuit intégré.

L'invention a également pour objet un support portable de données à circuit intégré, tel qu'une carte à circuit intégré, mettant en oeuvre un tel procédé.

### ETAT DE LA TECHNIQUE

Les cartes à circuit intégré, ou cartes à puce, comprennent typiquement un processeur ou microcontrôleur ainsi que de la mémoire volatile de type RAM, de la mémoire réinscriptible, comme par exemple de la mémoire de type EEPROM ou Flash et de la mémoire non réinscriptible de type ROM, ces types de mémoire pouvant contenir les applications et programmes ainsi que des données de configuration ou des données applicatives dont des identifiants d'application. Ces cartes sont destinées à échanger des données sécurisées avec des terminaux informatiques et mettent en oeuvre à cette fin des protocoles de communication avec différents types de terminaux informatiques, des moyens de connexion avec ou sans contact avec ceux-ci (respectivement des plages de contact ou une antenne reliées au circuit intégré) et disposent d'une organisation par fichiers de type « Master file », « Elementary File » et « Dedicated File » selon la norme ISO 7816-4. Classiquement, la mémoire de ces cartes renferme notamment une application, à laquelle la carte donne accès, telle qu'une application de paiement (carte de débit), un contrôle d'accès (badge d'accès à certaines zones d'un bâtiment), un titre de transport (abonnement) ou encore un identifiant sur un réseau téléphonique (carte SIM) .

L'évolution hétérogène des terminaux, entre deux zones géographiques par exemple, rend nécessaire le respect par ces cartes de plusieurs normes, particulièrement en ce qui concerne le nommage des applications qu'elles renferment (souci de compatibilité et de rétrocompatibilité). Ceci est dû à la nécessité pour une même carte de pouvoir fonctionner sur des terminaux comportant des protocoles de communications différents, ou des versions différentes d'un même programme informatique interagissant avec le contenu de la carte. Par exemple les terminaux peuvent utiliser des identifiants différents pour une même application contenue dans la carte selon que la communication est établie via les plages de contact ou via l'antenne de la carte.

Egalement, la convergence des supports voit l'émergence de cartes à circuit intégré multi-applications. Ces cartes renferment plusieurs fichiers d'applications qui permettent à une même carte de pouvoir réaliser, par exemple, une fonction de paiement classique par débit d'un compte bancaire et une fonction de porte-monnaie électronique. Certaines cartes SIM pour téléphone portable contiennent des applications de porte-monnaie électronique sans contact. On voit également des cartes de paiement disposer d'applications du type « cartes de fidélité » enregistrant les données personnelles des clients, et étant communes à plusieurs enseignes différentes.

Lorsque l'on réalise la migration d'un parc de terminaux d'un système vers un autre système utilisant un identifiant nouveau pour une même application, il est nécessaire de :
- reprendre l'intégralité des cartes en circulation ;
- sauvegarder les données particulières à l'utilisateur contenues dans la carte pour l'ancienne application ;
- effacer l'ancienne application ;
- réinstaller la nouvelle version de cette application avec son nouvel identifiant, après intégration des données particulières de l'utilisateur.

Cette opération, en substituant un nouvel identifiant à l'identifiant original, peut créer des conflits lors de l'appel de cette application sous son identifiant original par un autre système. Elle oblige également à reprendre l'intégralité des cartes en circulation, ce qui représente une opération lourde et coûteuse dans le cas d'importants volumes de cartes en circulation. Une autre solution consiste à mettre à jour l'intégralité du parc des terminaux appelant l'application sous un identifiant donné en réutilisant cet identifiant dans la nouvelle version. Dans la pratique, cette réalisation est impossible car elle demanderait une mise à jour instantanée afin de ne pas pénaliser l'utilisateur. De même, l'évolution des normes impose parfois des règles de nommage différentes.

La solution la plus couramment retenue consiste à enregistrer, sur une même carte, plusieurs copies de la même application chacune sous un identifiant différent spécifique à un protocole de communication ou à une version du programme d'appel contenu dans un type de terminal.

Cette solution est extrêmement consommatrice de mémoire sur la carte, alors que cette ressource est limitée, et complique la gestion des mises à jour des données de l'utilisateur utilisées par chaque application. En effet, le changement d'une des données relatives à l'utilisateur (extension ou restriction de droit d'accès, changement d'adresse,...) oblige la mise à jour de chacune des différentes copies de l'application et peut parfois rendre nécessaire la synchronisation des données entre plusieurs applications. Une telle opération requiert une programmation complexe, elle aussi consommatrice de mémoire.

Le document "Card Payments Roadmap in the United States:
How Will EMV Impact the Future Payments Infrastructure?", XP055065063 (1 septembre 2012) est une publication relative à la norme EMV et dévoile un procédé de gestion d'identifiants dans une carte de paiement dans laquelle deux identifiants désignent la même application. Chaque identifiant renvoie directement à l'application désignée.

R. Thomas: "Betriebssysteme", XP055065065 (1 janvier 2010) explicite la notion de lien matériel ("hardlink").

US 2003/189092 A1 décrit un procédé de gestion d'identifiants dans une carte à circuit intégré communiquant avec un terminal, le circuit intégré étant agencé pour exécuter à la demande du terminal au moins un fichier désigné par l'identifiant principal et au moins un identifiant secondaire. La table d'identifiants est consultée à chaque fois qu'un terminal appelle l'identifiant secondaire.

### OBJET DE L'INVENTION

Un but de l'invention est de fournir un moyen simple et économe en mémoire pour gérer les différents identifiants d'une même application contenue dans la mémoire d'un support portable de données à circuit intégré.

### EXPOSE DE L'INVENTION

L'invention a comme objet un procédé et un support portable tels que définis dans les revendications.

A cet effet, on prévoit, selon l'invention, un procédé de gestion d'identifiants dans un support portable de données à circuit intégré, tel qu'une carte à circuit intégré, communiquant avec un terminal, le circuit intégré étant agencé pour exécuter à la demande du terminal au moins un fichier désigné par un identifiant principal et au moins un identifiant secondaire. Ledit procédé comprend les étapes :
- d'associer dans une table d'identifiants une même référence à tous les identifiants du fichier ;
- de consulter la table d'identifiants à chaque fois qu'un identifiant est appelé par un terminal connecté au circuit intégré et sélectionner dans la table d'identifiants le fichier dont la référence est associée à l'identifiant appelé ;
- de mémoriser l'identifiant utilisé par le terminal pour appeler le fichier et utiliser exclusivement celui-ci dans les échanges entre le circuit intégré et le terminal.

Ainsi, la table d'identifiants permet de maintenir l'usage de plusieurs identifiants pour désigner un même enregistrement de l'application sans avoir à conserver en mémoire autant d'enregistrements de l'application qu'il existe d'identifiants différents pour cette application. Ceci permet de limiter la quantité de mémoire nécessaire et en facilite une exploitation rapide. Dans un mode de réalisation particulier, la référence à laquelle est associée l'identifiant dans la table peut être un pointeur vers la zone mémoire qui contient l'application. Ceci permet de réduire le temps d'accès du terminal à l'application notamment en évitant une recherche approfondie en mémoire.

L'invention a également pour objet une carte à circuit intégré agencé pour mettre en oeuvre ce procédé.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux figures annexées, parmi lesquelles :
- la figure 1 est une représentation schématique d'une carte à circuit intégré et d'un terminal ;
- La figure 2 est une représentation schématique de l'arborescence des fichiers contenus dans la carte ;
- la figure 3 est une représentation schématique d'une table d'identifiants dans le cas d'une carte mono-application;
- la figure 4 est un logigramme des événements déclenchés par l'appel d'une application par un terminal ;
- la figure 5 est un logigramme des événements déclenchés par la demande d'un terminal de modifier l'identifiant d'une application ;
- la figure 6 est une représentation schématique d'une table d'identifiants dans le cas d'une carte multi-application ;
- la figure 7 est un logigramme des événements déclenchés par la demande d'un terminal d'ajouter un identifiant secondaire à une application ;
- la figure 8 est un logigramme des événements déclenchés par la demande d'un terminal de créer une application dans une carte à circuit intégré ;
- la figure 9 est une représentation schématique d'une table d'identifiants après création d'un nouvel identifiant secondaire ;
- la figure 10 est une représentation schématique d'une table d'identifiants après création d'une nouvelle application ;
- la figure 11 est une représentation schématique de l'arborescence des fichiers contenus dans la carte après création d'une nouvelle application ;
- la figure 12 est une représentation schématique de l'arborescence des fichiers contenus dans la carte selon un second mode de réalisation de l'invention;
- la figure 13 est une représentation schématique de la table d'identifiants du mode de la réalisation de la figure 12 ;
- la figure 14 est un logigramme des événements déclenchés par l'appel d'une application par un terminal selon le mode de réalisation de la figure 12.

### DESCRIPTION DETAILLEE DE L'INVENTION

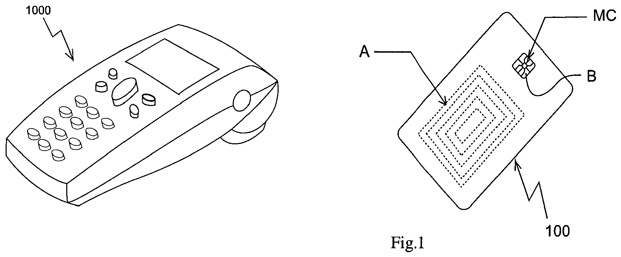

La figure 1 représente une carte à circuit intégré communiquant avec un terminal.

Une carte à circuit intégré telle qu'une carte à puce 100 comprend un corps de carte auquel est fixé un circuit intégré comportant un microcontrôleur MC relié à une mémoire morte, une mémoire vive et un module d'entrée / sortie. Le module d'entrée / sortie est relié à des plages de contact B s'étendant en surface du corps de carte et à une antenne A comportant des spires électriquement conductrices noyées dans le corps de carte. La carte 100 est destinée à communiquer avec un terminal 1000. La communication entre la carte à puce 100 et le terminal 1000 peut se faire par contact avec les plages B par introduction de celle-ci dans un lecteur adapté ou par échange sans contact avec l'antenne A dans le cadre d'une communication de type NFC par exemple. Le terminal 1000 sélectionne des applications présentes sur la carte et échange des données avec celles-ci. Certains terminaux peuvent, sous réserve d'y être autorisés par la carte, modifier les applications qu'elle contient ou créer de nouvelles applications. La mémoire de la carte peut contenir plusieurs applications 1 et 2 désignées par un identifiant principal IP1, IP2. On considérera, dans le cadre de l'exemple de mise en oeuvre ici décrit, qu'au moins l'une de ces applications doit respecter deux règles de nommage et peut être ainsi appelée indifféremment par son identifiant principal IP1 ou un identifiant secondaire IS₁₀.

L'architecture de la mémoire de la carte à puce 100 fait intervenir plusieurs types de fichiers dont les fichiers « Master file » (fichier racine), « Dedicated file DF » (répertoire contenant d'autres fichiers et éventuellement des données) et « Elementary file EF » (fichiers de données).

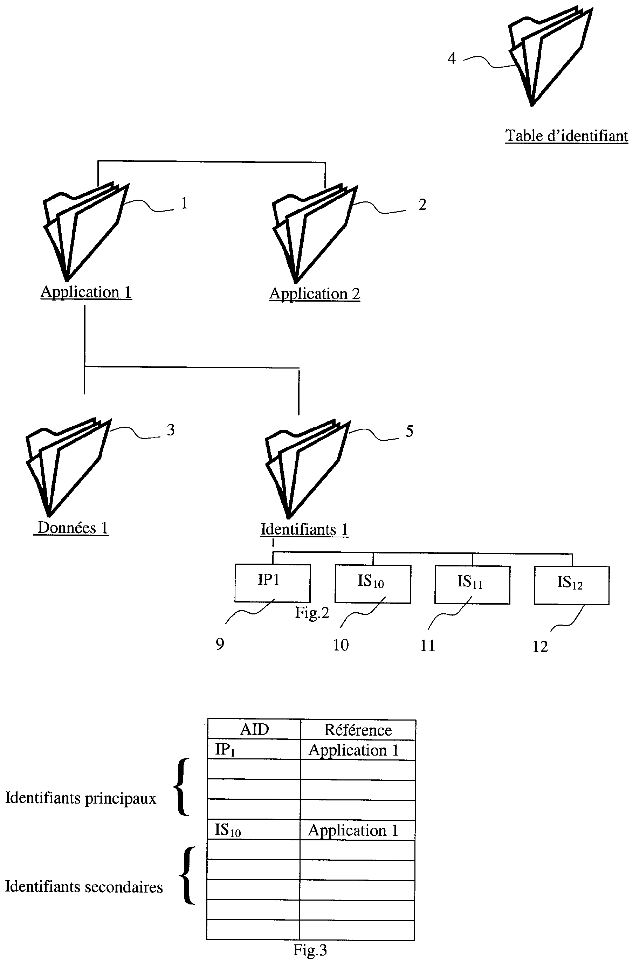

La figure 2 représente l'arborescence de fichiers dans la mémoire de la carte à puce 100. Elle comprend un fichier MF, une table d'identifiants 4 sous la forme d'un fichier EF, au moins un fichier DF 1 nommé « application 1 » contenant un fichier EF 3 des données spécifiques à l'application et nommé « Données 1 » et un fichier EF 5 d'identifiants nommé « identifiants 1 ». Le fichier EF 5 d'identifiants contient les enregistrements suivants : fichier 9 d'identifiant principal IP₁ de l'application 1 ainsi que ses identifiants secondaires IS₁₀, IS₁₁, IS₁₂ ... sous la forme d'enregistrements d'identifiant 9, 10, 11, 12. On remarquera que, dans le cas de l'existence de plusieurs applications sur la même carte, les répertoires de chaque application 1 et 2 contiennent également un fichier EF de données et un fichier EF d'identifiants.

On se place, ici, dans le cadre d'une carte à puce 100 ne gérant qu'une seule application 1. La figure 3 représente la table d'identifiants 4 de cette carte à puce 100. Celle-ci associe à chaque identifiant principal IPx ou secondaire ISx d'une application présente sur la carte 100 une référence vers cette application. Par exemple, l'identifiant IP₁, enregistré dans la colonne AID (« Application Identifier »), a comme référence associée « Application 1 » qui renvoie au fichier DF 1 qui contient, entre autres, le fichier EF 3 de données de l'application 1 « Données 1 » et le fichier EF 5 d'identifiants. L'identifiant secondaire IS₁₀ de l'application 1 possède la même référence « Application 1 » que IP₁, c'est-à-dire le fichier DF 1.

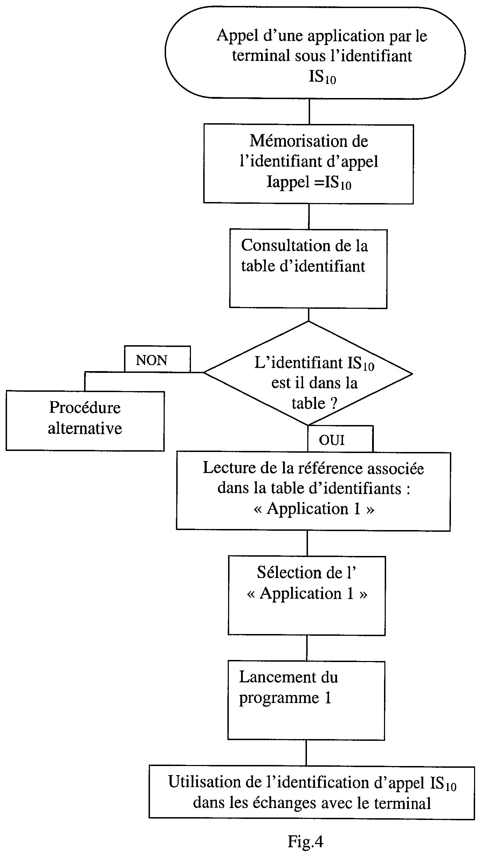

Les figures 4, 5, 7 et 8 décrivent les opérations effectuées par la carte lors d'échanges entre un terminal 1000 et une carte à puce 100 conforme à l'invention, selon diverses demandes du terminal. Dans tous ces logigrammes, les formes oblongues désignent les opérations réalisées par le terminal 1000, les formes rectangulaires désignent les opérations élémentaires réalisées par la carte 100, les losanges sont les opérations logiques réalisées par la carte 100.

La figure 4 décrit les opérations effectuées par la carte 100 dans le cas de l'appel, par le terminal 1000, d'une application via son identifiant secondaire IS₁₀.

Le terminal 1000 appelle l'application 1 par l'identifiant secondaire IS₁₀. La carte 100 mémorise la valeur IS₁₀ en l'attribuant à une variable mémoire (ou identifiant d'appel) Iappel puis consulte la table d'identifiants 4. Cette consultation consiste en une recherche, dans la colonne « AID », de la valeur utilisée par le terminal 1000 pour appeler l'application 1 -IS₁₀-. Si cette valeur ne figure pas dans la table, un mode de sélection alternatif est utilisé. Ce mode peut consister, par exemple en une requête d'activation directe de l'application avec laquelle le terminal cherche à communiquer. Dans le cas où la valeur utilisée par le terminal 1000 pour appeler l'application 1 -IS₁₀- figure dans la table d'identifiants 4, la carte 100 lit, dans la table d'identifiants 4, la référence associée à IS₁₀. Ici, la référence associée à IS₁₀ est « Application 1 ». Cette référence renvoie, de manière connue en elle-même, à l'application 1 et permet au microcontrôleur de charger les données relatives à l'application 1 qui sont contenues dans le fichier EF 3 « données 1 ». Ainsi, un seul fichier 1 en mémoire correspond à deux identifiants d'application IP₁ et IS₁₀. L'invention permet donc de substituer un unique fichier d'application 1 et une table d'identifiants 4 à deux fichiers d'application identiques à celui de l'application 1 et qui auraient été nommés « Application IP₁ » et « Application IS_{10 »}. L'économie de mémoire croit significativement avec le nombre d'identifiants secondaires de l'application 1 et le nombre d'applications présentes dans la carte. La valeur utilisée par le terminal 1000 pour appeler l'application -IS₁₀- est conservée et utilisée par la carte 100 pour communiquer avec le terminal 1000. De cette manière, le terminal 1000 ne voit aucune différence entre une carte 100 faisant appel à une table d'identifiants 4 et une carte utilisant une configuration « classique » comprenant deux applications identiques enregistrées sous des identifiants différents. Le terminal reçoit donc les informations auxquelles il s'attend. Ceci permet d'éviter toute incohérence lors des échanges qui utilisent le nom de l'application comme partie d'une clé de chiffrement ou comme donnée entrante d'un calcul cryptographique permettant de vérifier une absence de piratage du flux d'échange entre le terminal 1000 et la carte 100.

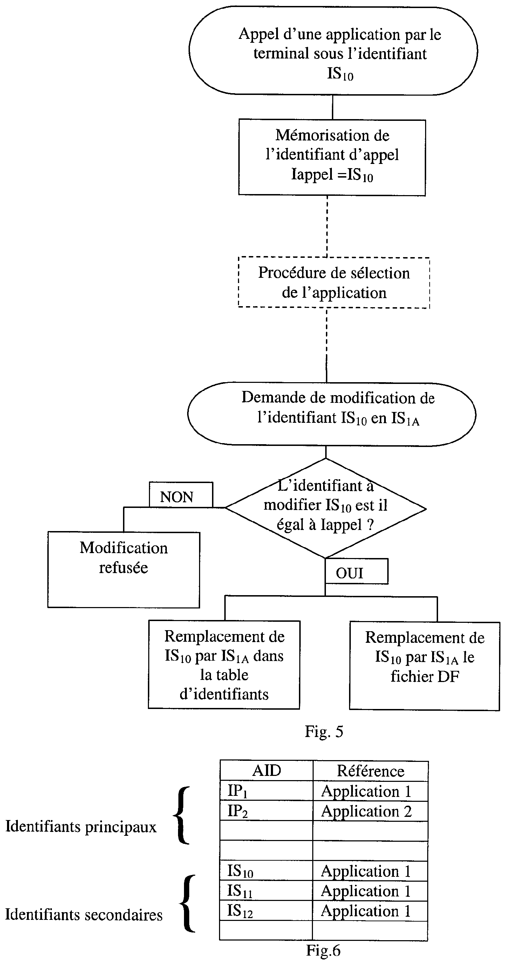

La figure 5 décrit les opérations effectuées par la carte 100 dans le cas d'une demande, par le terminal 1000, de modification de l'identifiant d'une application. Le terminal 1000 appelle une application sous l'identifiant IS₁₀. Selon la procédure précédemment décrite, la valeur utilisée par le terminal 1000 pour appeler l'application -IS₁₀- est mémorisée dans la case mémoire Iappel et l'application correspondante -Application 1- est sélectionnée. Le terminal 1000 demande alors à modifier l'identifiant IS₁₀ en IS_{1A}. La carte à puce 100 compare l'identifiant dont le terminal demande la modification -IS₁₀- avec l'identifiant initialement utilisé par le terminal 1000 pour appeler l'application. Pour ce faire la carte lit la valeur mémorisée dans la case mémoire Iappel : ici IS₁₀. Comme c'est le cas dans notre exemple, l'identifiant à modifier correspond à la valeur de la case mémoire Iappel, ainsi la modification est autorisée et l'identifiant IS₁₀ est modifié en IS_{1A} dans la table d'identifiants 4 et dans l'enregistrement d'identifiant contenu dans le fichier EF 5 d'identifiants. Si l'identifiant à modifier avait été différent de celui sous lequel l'application a été appelée, la modification aurait été refusée. Un tel cas de figure peut être illustré comme suit. Le terminal 1000 appelle l'application 1 sous l'identifiant IS₁₁. La mémorisation par la carte 100 de celui-ci se fait en attribuant la valeur IS₁₁ à la case mémoire Iappel. Lorsque le terminal 1000 demande à modifier l'identifiant IS₁₀ en IS_{1A}, la carte 100 compare l'identifiant dont le terminal demande la modification -IS₁₀- avec l'identifiant utilisé par le terminal 1000 pour appeler l'application. Pour ce faire la carte 100 lit la valeur mémorisée dans la case mémoire Iappel. Cette valeur est ici égale à IS₁₁. L'identifiant d'appel IS₁₁ différant de l'identifiant dont le terminal demande la modification -IS₁₀-, la carte 100 retourne un message de refus de la modification demandée par le terminal 1000.

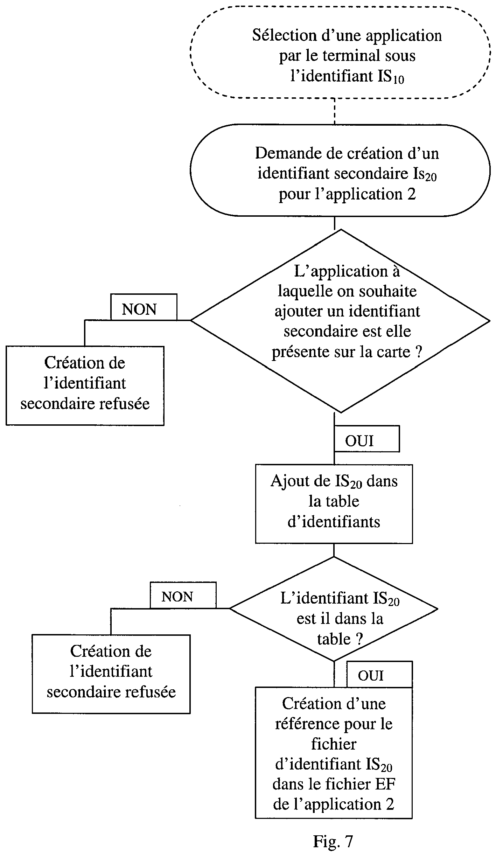

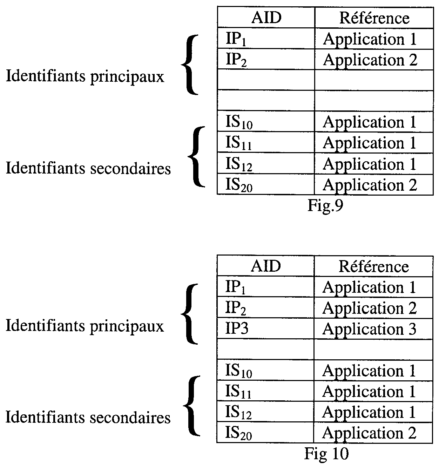

On se place, maintenant, dans le cadre d'une carte à puce 100 gérant plusieurs applications, ici deux, à savoir l'application 1 et l'application 2. La table d'identifiants correspondant à cette carte est représentée en figure 6. L'application 1 possède un identifiant principal IP₁ et trois identifiants secondaires IS₁₀, IS₁₁, IS₁₂. L'application 2 possède un seul identifiant principal IP₂. La figure 7 illustre les opérations effectuées par la carte 100 dans le cas d'une demande, par le terminal 1000, de créer un identifiant secondaire à l'application 2. Cette modification peut, par exemple, intervenir lorsque l'on souhaite ajouter à une carte de paiement à une cantine d'entreprise, la possibilité de régler ses achats auprès des distributeurs automatiques de cette même entreprise, type machine à café. Le protocole de communication de ces distributeurs automatiques n'utilise pas le même identifiant que les terminaux de paiement de la cantine de l'entreprise. La carte à puce a en mémoire l'identité de l'utilisateur ainsi qu'un montant de crédit disponible. L'application 2 débite et crédite le montant enregistré sur la carte pour le règlement de la cantine d'entreprise via une application nommée IP2, et l'on souhaite créer une application IS₂₀ qui prélèvera, sur cette même somme, les achats réalisés auprès des distributeurs automatiques. Il est alors nécessaire que les deux applications interviennent sur les mêmes données. La création d'un nouvel identifiant pour cette application se fait selon la procédure suivante : après que le terminal 1000 ait sélectionné l'application 2, il demande à créer un identifiant secondaire IS₂₀ pour l'application 2. La carte 100 vérifie alors la présence effective de l'application 2 sur la carte. Si l'application 2 est effectivement présente sur la carte, celle-ci ajoute à la table d'identifiants 4 l'identifiant IS₂₀ qui est alors associé à la même référence que l'application 2. A l'issue de cette opération, la carte vérifie que l'identifiant IS₂₀ a été correctement écrit dans la table d'identifiants. Si tel est le cas, le fichier d'identifiant IS₂₀ est alors créé dans le fichier dédié EF 5 d'identifiants. La table d'identifiants 4 devient alors la table représentée en figure 9. La vérification d'écriture effectuée par la carte 100 permet d'éviter que la carte recherche dans la table l'identifiants, un identifiant secondaire dont le stockage est défectueux alors même que le fichier d'identifiant est créé. En cas d'écriture incorrecte, la création de l'identifiant secondaire IS₂₀ est refusée. En effet, la recherche de l'application sous cet identifiant par d'autres moyens serait infructueuse, la carte ne comprenant pas d'application nommée « Application 2 ». Cette procédure permet de fiabiliser le fonctionnement à l'aide d'une table d'identifiants. Si l'application 2 n'avait pas été présente sur la carte, celle-ci aurait retourné un message au terminal 1000 indiquant son refus de créer un identifiant secondaire

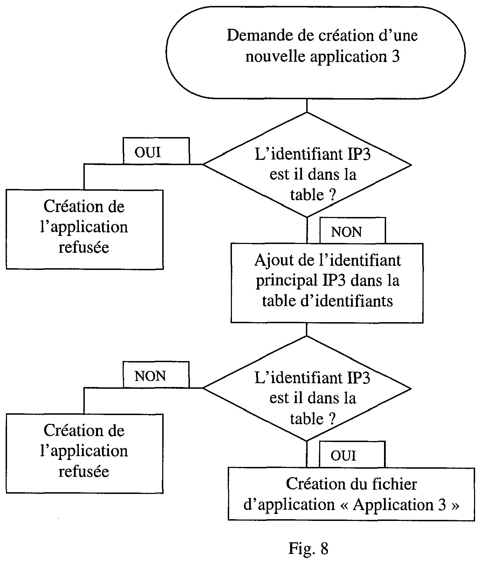

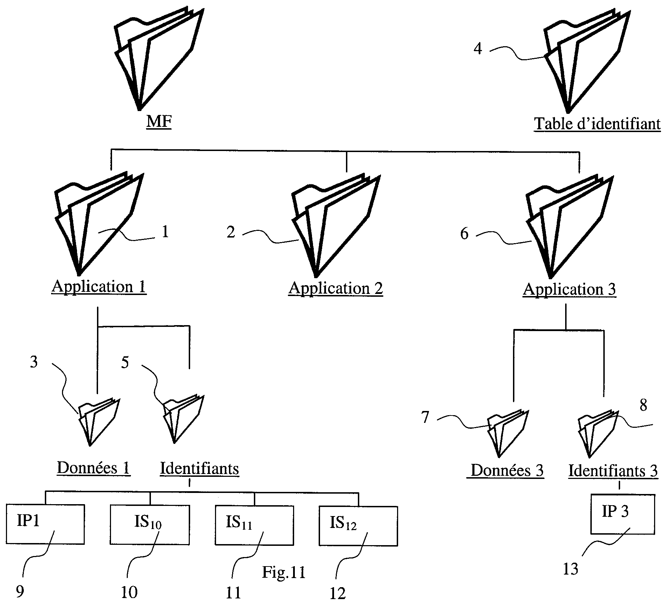

La figure 8 décrit les opérations effectuées par la carte 100 dans le cas où le terminal 1000 demande la création d'une nouvelle application « Application 3 » dont l'identifiant principal est IP3. Après avoir vérifié que cet identifiant n'est pas déjà présent dans la table d'identifiants 4 (c'est-à-dire déjà attribué à une application), le microcontrôleur de la carte ajoute alors l'identifiant principal IP3 dans la table d'identifiants 4 et l'associe à l'Application 3 à créer. La carte vérifie ensuite que l'identifiant IP3 figure effectivement dans la table d'identifiants 4. Si celui-ci n'y figure pas, la création de l'application 3 est refusée. Si l'identifiant IP3 figure dans la table d'identifiants 4, le fichier « Application 3 » est alors créé. Ce fichier renferme au moins un fichier EF 8 d'identifiants contenant l'enregistrement d'identifiant 13 de l'identifiant IP3 de l'application 3 et un fichier EF 7 « Données 3 ». La création correcte du fichier « Application 3 » est vérifiée par des moyens connus de vérification d'intégrité de fichiers. La table d'identifiants 4 devient celle représentée en figure 10 et l'arborescence de la figure 2 devient alors celle de la figure 11. Là encore, cette procédure vise à fiabiliser le fonctionnement de la carte 100 en évitant qu'une application 3 ne soit créée sur la carte 100 et ne figure pas dans la table d'identifiants 4.

Selon un mode de réalisation particulier de l'invention, la référence associée dans la table d'identifiants 4 peut comprendre un pointeur mémoire qui dirige le système de la carte 100 directement vers l'emplacement mémoire du fichier données d'application plutôt que de passer par une table d'adressage associant une référence à un emplacement dans la mémoire. Le temps d'accès à l'application est réduit puisque le temps de recherche en mémoire est économisé.

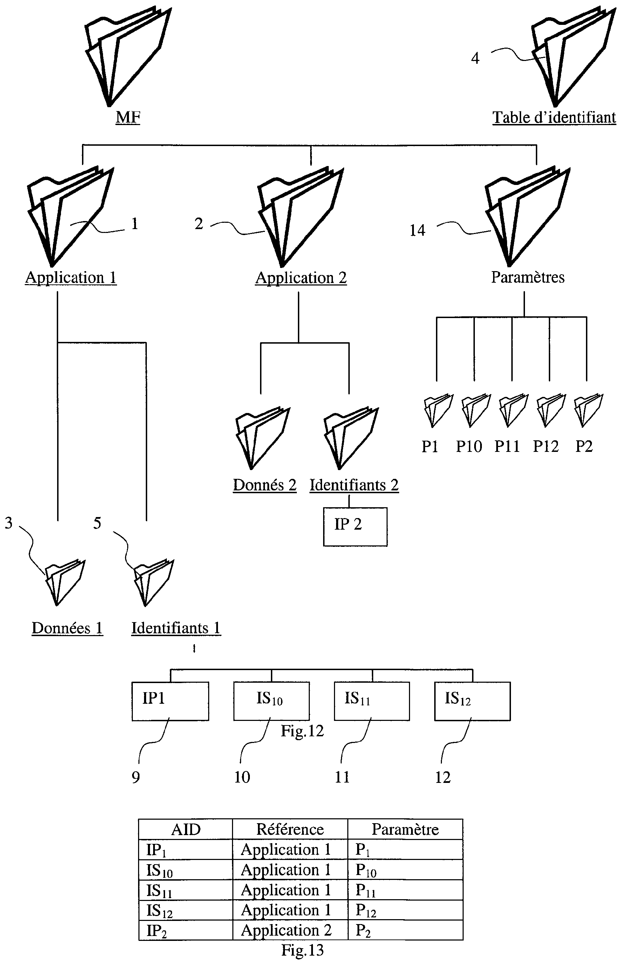

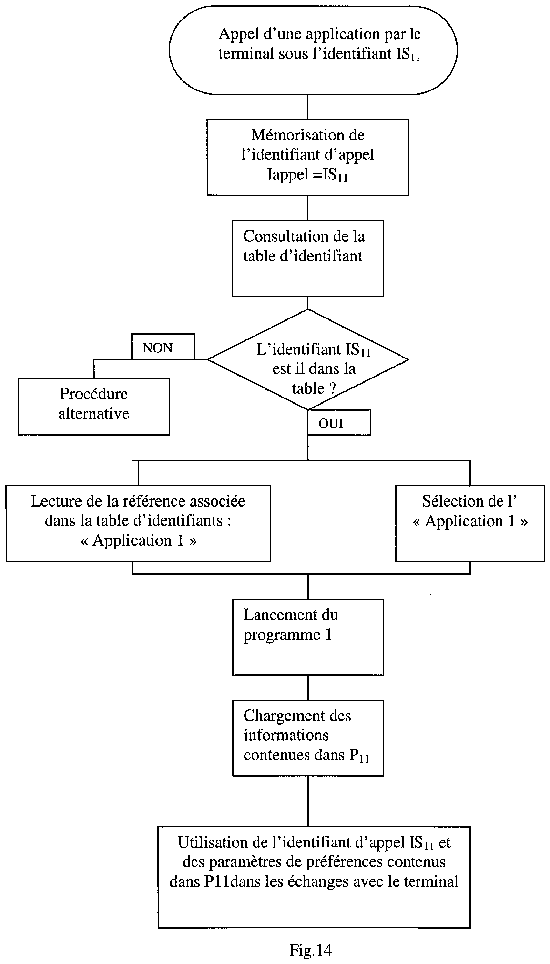

Selon un autre mode de réalisation et en référence aux figures 12 à 14, le fichier MF comprend un fichier DF 14 de paramétrage nommé « Paramètres » qui contient les fichiers de paramétrage P1, P10, P11, P12, P2, relatifs aux identifiants principaux et secondaires de l'application 1 : IP1, IS₁₀, IS₁₁, IS₁₂, et à l'identifiant principal IP2 de l'application 2. La table d'identifiants 4 représentée en figure 13 associe également à chaque identifiant IP1, IS₁₀, IS₁₁, IS₁₂ , et IP2 des applications présentes sur la carte, une référence à un fichier de paramétrage P1, P10, P11, P12 et P2. Un tel fichier comprend des informations attachées au comportement à adopter par l'application en fonction de l'identifiant sélectionné pour l'appeler. Ces fichiers peuvent contenir des identifiants et/ou mots de passe qu'il ne serait alors plus utile de ressaisir ou encore des fichiers « cookies » enregistrant les préférences de l'utilisateur relatives à des options d'utilisation de l'application. En référence à la figure 14, la sélection de l'identifiant d'une application présente sur la carte 100 par le terminal 1000 - ici IS₁₁ - se fait suivant le procédé préalablement décrit en figure 4. Parallèlement à la lecture de la référence, associée dans la colonne « Référence » de la table d'identifiants 4, à l'identifiant utilisé pour appeler l'application, le terminal 1000 lit, dans la colonne « Paramètres » de la table d'identifiants 4, la référence à l'emplacement mémoire du fichier de paramétrage P11 associé à l'identifiant utilisé -IS₁₁- pour appeler l'application. Lors des échanges avec le terminal 1000, la carte 100 utilise l'identifiant IS₁₁ et les préférences d'utilisation contenues dans le fichier P11.

Bien entendu, l'invention n'est pas limitée aux modes de réalisation décrits mais englobe toute variante entrant dans le champ de l'invention telle que définie par les revendications.

En particulier,
- bien que des modes de réalisations soient décrits en rapport avec une carte à une application, l'invention s'applique également dans le cas de cartes multi-applications ;
- bien que l'arborescence des fichiers contenus dans la carte soit ici une arborescence par applications, l'invention s'applique également à d'autres répartitions des fichiers, comme par exemple une répartition fonctionnelle, un fichier regroupant alors tous les fichiers DF et un autre regroupant tous les fichiers « programmes » ;
- bien que la description traite, ici, des identifiants d'une application, l'invention s'applique également à d'autres types de fichiers ou répertoires pouvant comprendre plusieurs identifiants tels que par exemple des fichiers EF, DF ou ADF ;
- bien que la carte à puce dispose ici d'une antenne et de plages de contact lui permettant de communiquer avec le terminal, l'invention s'applique également à d'autres types de cartes telles que, par exemple, des cartes à contacts seulement, des cartes à contacts purs ou des cartes duales mettant en oeuvre une communication par contacts et par antenne ou tout autre type de support de données utilisant une puce telle que celle utilisée dans les cartes à circuit intégré.

## Revendications

1. Procédé de gestion d'identifiants dans un support portable de données à circuit intégré (100), tel qu'une carte à circuit intégré, communiquant avec un terminal (1000), le circuit intégré étant agencé pour exécuter à la demande du terminal (1000) au moins un fichier désigné par un identifiant principal et au moins un identifiant secondaire, comprenant les étapes :
- d'associer dans une table d'identifiants (4) une même référence à tous les identifiants du fichier ;
- de consulter la table d'identifiants (4) à chaque fois qu'un identifiant est appelé par un terminal (1000) dialoguant avec le circuit intégré (100) et sélectionner dans la table d'identifiants (4) le fichier dont la référence est associée à l'identifiant appelé ;
le procédé étant caractérisé en une étape de mémorisation de l'identifiant utilisé par le terminal pour appeler le fichier et l'utilisation exclusive de ce dernier dans les échanges entre le circuit intégré (100) et ledit terminal (1000),
et dans lequel lorsqu'un terminal (1000) souhaite créer dans le circuit intégré (100) un nouveau répertoire d'application (6) dédié à un fichier dudit circuit intégré, celui-ci vérifie préalablement à la création dudit répertoire si l'identifiant principal de ce fichier a bien été correctement stocké dans la table d'identifiants (4), la création du répertoire de fichier étant refusée en cas de stockage incorrect de l'identifiant principal du fichier dans la table d'identifiants (4) ou si l'identifiant existe déjà dans la table d'identifiants (4).

2. Procédé selon la revendication 1, dans lequel une modification d'un des identifiants d'un fichier par un terminal (1000) n'est possible que si celui-ci a été appelé par le terminal (1000) en utilisant ledit identifiant.

3. Procédé selon la revendication 1, dans lequel lorsqu'un terminal (1000) souhaite créer un nouvel identifiant secondaire dans le circuit intégré (100), celui-ci vérifie si le fichier désigné par ledit identifiant secondaire a bien été préalablement créé, l'identifiant secondaire n'étant créé dans la table d'identifiants (4) que si l'existence du fichier est confirmée.

4. Procédé selon la revendication 1, dans lequel l'identifiant principal ou secondaire d'un fichier est contenu dans un espace mémoire dédié (5, 8).

5. Procédé selon la revendication 4, dans lequel, lorsqu'un terminal (1000) souhaite créer un identifiant secondaire (12) dans un répertoire dédié (5) du circuit intégré (100), celui-ci vérifie, préalablement à la création dudit identifiant secondaire si celui-ci est correctement stocké dans la table d'identifiants (4), la création de l'identifiant secondaire étant refusée en cas d'écriture incorrecte de l'identifiant secondaire dans la table d'identifiants (4).

6. Procédé selon la revendication 1, dans lequel la référence à laquelle sont associés les identifiants du fichier comprend un pointeur vers une zone mémoire qui contient l'application.

7. Procédé selon la revendication 1, dans lequel, lorsque le fichier appelé par le terminal (1000) ne figure pas dans la table d'identifiants (4), celui-ci est sélectionné selon une procédure alternative.

8. Procédé selon la revendication 1, dans lequel la table d'identifiants (4) associe également à l'identifiant utilisé pour appeler le fichier une référence à un emplacement mémoire particulier comprenant des paramètres d'utilisation spécifiques audit identifiant utilisé pour appeler le fichier.

9. Support portable de données à circuit intégré agencé pour la mise en oeuvre du procédé selon l'une quelconque des revendications précédentes.

10. Support selon la revendication 9, sous la forme d'une carte à circuit intégré.

## Patentansprüche

1. Verfahren zum Verwalten von Kennungen in einem tragbaren Datenträger mit integriertem Schaltkreis (100), wie z. B. eine Chipkarte, der mit einem Terminal (1000) kommuniziert, wobei der integrierte Schaltkreis so ausgebildet ist, dass er auf Anfrage des Terminals (1000) mindestens eine Datei ausführt, die durch eine Hauptkennung und mindestens eine Nebenkennung bezeichnet wird, umfassend die Schritte:
- Verknüpfen einer selben Referenz mit allen Kennungen der Datei in einer Tabelle (4) von Kennungen;
- Konsultieren der Tabelle (4) von Kennungen jedes Mal, wenn eine Kennung von einem Terminal (1000) aufgerufen wird, der mit dem integrierten Schaltkreis (100) einen Dialog führt, und Auswählen der Datei aus der Tabelle (4) von Kennungen, deren Referenz mit der aufgerufenen Kennung verknüpft ist;
wobei das Verfahren **gekennzeichnet ist durch** einen Schritt des Speicherns der Kennung, die von dem Terminal zum Aufrufen der Datei verwendet wird, und die ausschließliche Verwendung dieser Kennung in den Austauschen zwischen dem integrierten Schaltkreis (100) und dem genannten Terminal (1000),
und bei dem, wenn ein Terminal (1000) in dem integrierten Schaltkreis (100) ein neues Anwendungsverzeichnis (6) erzeugen will, das einer Datei des integrierten Schaltkreises zugeordnet ist, der integrierte Schaltkreis vor der Erzeugung des Verzeichnisses prüft, ob die Hauptkennung dieser Datei in der Tabelle (4) von Kennungen korrekt gespeichert wurde, wobei die Erzeugung des Dateiverzeichnisses im Falle einer inkorrekten Speicherung der Hauptkennung der Datei in der Tabelle (4) von Kennungen oder für den Fall, dass die Kennung bereits in der Tabelle (4) von Kennungen existiert, verweigert wird.

2. Verfahren nach Anspruch 1, bei dem eine Modifizierung einer der Kennungen einer Datei durch einen Terminal (1000) nur möglich ist, wenn diese Datei unter Verwendung der genannten Kennung von dem Terminal (1000) aufgerufen wurde.

3. Verfahren nach Anspruch 1, bei dem, wenn ein Terminal (1000) eine neue Nebenkennung in dem integrierten Schaltkreis (100) erzeugen will, dieser prüft, ob die Datei, die durch die genannte Nebenkennung bezeichnet wird, zuvor erzeugt wurde, wobei die Nebenkennung in der Tabelle (4) von Kennungen nur erzeugt wird, wenn das Vorhandensein der Datei bestätigt wird.

4. Verfahren nach Anspruch 1, bei dem die Haupt- oder Nebenkennung einer Datei in einem zugeordneten Speicherbereich (5, 8) enthalten ist.

5. Verfahren nach Anspruch 4, bei dem, wenn ein Terminal (1000) eine Nebenkennung (12) in einem zugeordneten Verzeichnis (5) des integrierten Schaltkreises (100) erzeugen will, dieser vor dem Erzeugen der genannten Nebenkennung prüft, ob diese in der Tabelle (4) von Kennungen korrekt gespeichert ist, wobei die Erzeugung der Nebenkennung verweigert wird, wenn die Nebenkennung inkorrekt in die Tabelle (4) von Kennungen geschrieben ist.

6. Verfahren nach Anspruch 1, bei dem die Referenz, mit der die Kennungen der Datei verknüpft sind, einen Zeiger auf einen Speicherbereich umfasst, der die Anwendung enthält.

7. Verfahren nach Anspruch 1, bei dem, wenn die Datei, die von dem Terminal (1000) aufgerufen wird, nicht in der Tabelle (4) von Kennungen erscheint, diese Datei unter Verwendung eines alternativen Verfahrens ausgewählt wird.

8. Verfahren nach Anspruch 1, bei die Tabelle (4) von Kennungen auch die Kennung, die zum Aufrufen der Datei verwendet wurde, mit einer Referenz auf einen besonderen Speicherplatz verknüpft, der Nutzungsparameter umfasst, die für die zum Aufrufen der Datei verwendete Kennung spezifisch sind.

9. Tragbarer Datenträger mit integriertem Schaltkreis, der so ausgebildet ist, dass er das Verfahren nach einem der vorhergehenden Ansprüche durchführt.

10. Träger nach Anspruch 9, in Form einer Chipkarte.

## Claims

1. A method of managing identifiers in a portable data medium having an integrated circuit (100), such as a smart card, suitable for communicating with a terminal (1000), the integrated circuit being arranged to respond to a request from the terminal (1000) by executing at least one file specified by a main identifier and by at least one secondary identifier, the method comprising the steps of:
· associating a single reference with all of the identifiers of the file in a table (4) of identifiers;
· consulting the table (4) of identifiers on each occasion that an identifier is called by a terminal (1000) dialoging with the integrated circuit (100) and selecting from the table (4) of identifiers the file having its reference associated with the called identifier;
the method being **characterized in** a step of memorizing the identifier used by the terminal for calling the file and the exclusive use of that identifier in the exchanges between the integrated circuit (100) and said terminal (1000),
and wherein, when a terminal (1000) seeks to create in the integrated circuit (100) a new application directory (6) dedicated to a file of said integrated circuit, the integrated circuit verifies, prior to creating said directory, whether the main identifier of the file has been stored correctly in the table (4) of identifiers, with creation of the file directory being refused in the event of the main identifier of the file being incorrectly stored in the table (4) of identifiers or if the identifier already exists in the table (4) of identifiers.

2. A method according to claim 1, wherein it is possible for a terminal (1000) to modify an identifier of a file only if the file has been called by the terminal (1000) while using said identifier.

3. A method according to claim 1, wherein, when a terminal (1000) seeks to create a new secondary identifier in the integrated circuit (100), the integrated circuit verifies whether the file specified by said secondary identifier has already been created, with the secondary identifier being created in the table (4) of identifiers only if it is confirmed that the file exists.

4. A method according to claim 1, wherein the main or secondary identifier of a file is contained in a dedicated memory space (5, 8).

5. A method according to claim 4, wherein, when a terminal (1000) seeks to create a secondary identifier (12) in a dedicated directory (5) of the integrated circuit (100), the integrated circuit verifies, prior to creating said secondary identifier, whether the secondary identifier is correctly stored in the table (4) of identifiers, with creation of the secondary identifier being refused in the event of the secondary identifier being incorrectly written in the table (4) of identifiers.

6. A method according to claim 1, wherein the reference with which the identifiers of the file are associated comprises a pointer to a memory zone that contains the application.

7. A method according to claim 1, wherein, when the file called by the terminal (1000) does not appear in the table (4) of identifiers, the file is selected using an alternative procedure.

8. A method according to claim 1, wherein the table (4) of identifiers also associates the identifier used for calling the file with a reference to a particular memory location containing utilization parameters that are specifics to said identifier used for calling the file.

9. A portable data medium having an integrated circuit arranged to implement the method according to any preceding claim.

10. A medium according to claim 9, in the form of a smart card.
